# EUROPÄISCHE PATENTSCHRIFT

(11) **EP 3 198 219 B1**
(45) Veröffentlichungstag und Bekanntmachung des Hinweises auf die Patenterteilung: **29.08.2018**
(21) Anmeldenummer: 15802049.5
(22) Anmeldetag: 26.11.2015
(51) Int. Cl.: G01B 5/20, F01D 5/14, G01B 21/04, B22C 9/10, B22D 31/00, F01D 5/18

(54) **TURBINENSCHAUFEL, VERFAHREN ZU IHRER HERSTELLUNG UND VERFAHREN ZUM ERMITTELN DER LAGE EINES BEIM GIESSEN EINER TURBINENSCHAUFEL VERWENDETEN GUSSKERNS**
TURBINE BLADE, METHOD FOR ITS PREPARATION AND METHOD FOR DETERMINING THE POSITION OF A CASTING CORE AFTER CASTING A TURBINE BLADE
AUBE DE TURBINE, SON PROCÉDÉ DE FABRICATION ET PROCÉDÉ DE DÉTERMINATION DE LA SITUATION D'UN NOYAU UTILISÉ LORS DE LA COULÉE D'UNE AUBE DE TURBINE

(30) Priorität: 01.12.2014 EP 14195672
(43) Veröffentlichungstag der Anmeldung: 02.08.2017
(73) Patentinhaber: Siemens Aktiengesellschaft, 80333 München (DE)
(72) Erfinder: GILL, Markus, 49479 Ibbenbüren (DE); MENKE, Christian, 45329 Essen (DE)
(86) Internationale Anmeldenummer: PCT/EP2015/077726
(87) Internationale Veröffentlichungsnummer: WO 2016/087293

(56) Entgegenhaltungen:
- EP-A1- 1 923 153
- WO-A1-2005/103451
- DE-A1-102005 021 666

## Beschreibung

Die vorliegende Erfindung betrifft eine Turbinenschaufel, insbesondere eine Leit- oder Laufschaufel einer Gasturbine, mit wenigstens einem nach außen offenen, eine Schaufelinnenfläche aufweisenden Hohlraum sowie ein Verfahren zum Herstellen einer derartigen Turbinenschaufel. Daneben betrifft die Erfindung ein Verfahren zum Ermitteln der Lage eines beim Gießen einer Turbinenschaufel verwendeten Gusskerns nach dem Gießen der Turbinenschaufel.

Turbinenschaufeln, wie insbesondere Leit- oder Laufschaufeln von Gasturbinen, weisen häufig nach außen offene Hohlräume auf. Diese können tief in das Schaufelinnere hineinreichen, wie beispielsweise Hohlräume für das Hindurchleiten von Kühlluft durch die Turbinenschaufel, oder nur wenig in das Schaufelinnere hineinreichen, wie beispielsweise die Vertiefung einer an der Schaufelspitze ausgebildeten Krone. Derartige Hohlräume werden beim Gießen der Turbinenschaufel mittels Gusskernen offengehalten, die nach dem Erstarren des Materials, aus dem die Turbinenschaufel hergestellt wird, chemisch oder thermisch aus dem Hohlraum durch eine nach außen weisende Öffnung des Hohlraums entfernt werden. Die genaue Positionierung der Gusskerne während des Gießprozesses ist dabei von großer Bedeutung für die Wanddicken der Turbinenschaufel und, im Falle einer Krone, für die Lage des Kronenbodens in der Spitze der Turbinenschaufel.

Im Rahmen von Qualifizierungsprozessen werden Turbinenbauteile daher einmalig hinsichtlich der radialen Lage des Gusskerns geprüft. Aufgrund der zerstörenden Prüfung ist eine weitere Verwendung der geprüften Turbinenschaufeln jedoch nicht möglich. Die Häufigkeit mit der eine derartige Qualitätsprüfung durchgeführt werden kann, ist daher begrenzt.

Die DE 10 2005 021 666 A1 beschreibt ein Verfahren und eine Vorrichtung zum Bestimmen der Position von mittels Kern erzeugten Ausstattungsmerkmalen in einem Wachsausschmelzgussstück. Hierzu werden Kernbezugssockel in einen Kernwulst oder Formteilgratabschnitt des Gussstückes inkorporiert, die als ein genaues Bezugssystem zum Lokalisieren der inneren Geometrie und der Position von Strukturmerkmalen dienen. Auf der Basis dieses Bezugssystems können dann genaue Normierungs- oder präzise spanabhebende Bearbeitungsschritte an den mittels Kern erzeugten inneren Merkmalen durchgeführt werden. Nach den Bearbeitungsschritten wird der Kernwulst oder Formteilgratabschnitt mit den Kernbezugssockeln mittels spanabhebender Bearbeitung entfernt.

Weiter offenbart die Druckschrift EP 1 923 153 A1 ein Verfahren zur Wanddickenbestimmung gegossener Turbinenschaufeln. Hierzu weisen die zur Herstellung der Turbinenschaufel verwendeten Gusskerne spitz zulaufende Kegel auf, welche sich in die zu messenden Wände hinein erstrecken. Nach dem Guss hinterlassen die Kegel in der gegossenen Wand Öffnungen, deren Größe von der tatsächlichen Wandstärke abhängt. Somit lässt sich anhand der Größe der Kegelöffnung feststellen, ob die Wandstärke den Vorgaben entspricht. Nachteilig an diesem Verfahren ist jedoch das Vorhandensein von Öffnungen, die zumeist ungewünscht und deshalb wieder zu verschließen sind. Mithin ergibt sich ein erhöhter Herstellungsaufwand.

Darüber hinaus ist ein Verfahren zum Verschließen einer Kernaustrittsöffnung einer hohlen Turbinenschaufel aus der WO 2005/103451 A1 bekannt. Dazu wird ein Verschlusselement durch Reibschluss mit der Turbinenschaufel verbunden.

Die US 2012/0034097A1 beschreibt eine Turbinenkomponente mit Elementen, die das Messen der Wanddicke der Turbinenkomponente im Rahmen einer Inspektion erleichtern. Die Elemente um-fassen jeweils eine ebene innere Inspektionsfläche und eine mit der inneren Inspektionsfläche fluchtende ebene äußere Inspektionsfläche. Die innere Inspektionsfläche wird mittels eines Gusskerns hergestellt, der eine Fläche zum Formen der inneren Inspektionsfläche aufweist. Im Rahmen der Inspektion kann eine Inspektionsvorrichtung wie eine Ultraschallsonde, eine Wirbelstromsonde oder dergl. ein Signal in die zueinander fluchtenden inneren und äußeren Inspektionsflächen senden, um aus dem zur Inspektionsvorrichtung zurückreflektierten Signal die Wanddicke der Turbinenkomponente zu ermitteln.

Im Verlauf einer Serienfertigung von Turbinenschaufeln kann es zu Abweichungen in der Lage und oder der Orientierung des Gusskerns bzw. der Gusskerne, insbesondere der radialen Lage des Gusskerns bzw. der Gusskerne, kommen, welche sich erst später beim Wiederaufarbeiten von verschlissenen Turbinenschaufeln bemerkbar machen. Während eines Wiederaufbereitungsprozesses für eine Turbinenschaufel werden in der Regel Beschichtungen chemisch entfernt, wobei auch eine, wenn auch kleine Wandschicht entfernt wird. Wenn nun während des Gießprozesses ein Gusskern nicht in seiner optimalen Lage war, führt dies dazu, dass in manchen Bereichen der Turbinenschaufel die Wandstärke geringer als die optimale Wandstärke ist. Dadurch wird die Zahl der möglichen Wiederaufbereitungsprozesse für die Gasturbinenschaufel verringert, was die maximale Lebensdauer von Turbinenschaufeln verringert und somit die Kosten einer Gasturbinenanlage erhöht. Außerdem beeinflusst die Wandstärke auch Wärmeübergangszonen einer Turbinenschaufel.

Es ist eine erste Aufgabe der vorliegenden Erfindung, ein Verfahren zum Herstellen einer Turbinenschaufel zur Verfügung zu stellen, welches es ermöglicht, die Lage, insbesondere die radiale Lage, eines oder mehrerer Gusskerne in einer Turbinenschaufel nach Fertigstellung der Turbinenschaufel jederzeit zerstörungsfrei zu ermitteln.

Es ist eine zweite Aufgabe der vorliegenden Erfindung, ein vorteilhaftes Verfahren zum zerstörungsfreien Ermitteln der Lage eines beim Gießen einer Turbinenschaufel verwendeten Gusskerns an der fertiggestellten Turbinenschaufel zur Verfügung zu stellen, welches jederzeit nach Fertigstellung der Turbinenschaufel das zerstörungsfreie Ermitteln der Lage des Gusskerns ermöglicht.

Eine dritte Aufgabe der vorliegenden Erfindung ist es, eine Turbinenschaufel mit einem nach außen offenen, eine Schaufelinnenfläche aufweisenden Hohlraum zur Verfügung zu stellen, die es ermöglicht, die Lage eines beim Herstellen der Turbinenschaufel verwendeten Gusskerns jederzeit zerstörungsfrei zu ermitteln.

Die erste Aufgabe wird durch ein Verfahren zum Herstellen einer Turbinenschaufel nach Anspruch 1 gelöst, die zweite Aufgabe durch ein Verfahren zum Ermitteln der Lage eines beim Gießen einer Turbinenschaufel verwendeten Gusskerns nach Anspruch 7 und die dritte Aufgabe durch eine Turbinenschaufel nach Anspruch 8. Die abhängigen Ansprüche enthalten vorteilhafte Ausgestaltungen der Erfindung.

Im erfindungsgemäßen Verfahren zum Herstellen von Turbinenschaufeln mit einer in einem Koordinatensystem definierten Schaufelgeometrie und wenigstens einem nach außen offenen, eine Schaufelinnenfläche aufweisenden Hohlraum werden die Schaufeln gegossen, wobei der wenigstens eine nach außen offene Hohlraum mittels wenigstens eines Gusskerns geformt wird, der eine die Schaufelinnenfläche formende Gusskernaußenfläche aufweist und der nach dem Gießprozess aus dem Hohlraum entfernt wird. Die Gusskernaußenfläche weist dabei wenigstens eine ebene Referenzfläche mit definierter Soll-Lage und definierter Soll-Orientierung in Bezug auf ein Koordinatensystem, in dem die Schaufelgeometrie definiert ist, auf. Die wenigstens eine ebene Referenzfläche ist derart in der Gusskernfläche angeordnet, dass sie in der Schaufelinnenfläche wenigstens eine für den Messkopf einer Koordinatenmesseinrichtung zugängliche ebene Abtastfläche formt. Dadurch, dass die für den Messkopf einer Koordinatenmesseinrichtung zugängliche Abtastfläche eine ebene Fläche ist, kann durch Abtasten wenigstens dreier Punkte der Abtastfläche nicht nur die Lage der ebenen Abtastfläche erfasst werden, sondern auch die Orientierung der Abtastfläche. Durch die Anordnung der Abtastfläche in der Schaufelinnenfläche braucht diese am Ende des Fertigungsprozesses nicht entfernt zu werden.

Anhand der definierten Abtastfläche, deren Soll-Lage und Soll-Orientierung im Koordinatensystem, in dem die Schaufelgeometrie definiert ist, bekannt sind, kann mit Hilfe einer Koordinatenmesseinrichtung die Lage und/oder die Orientierung des Gusskerns beim Gießen der Turbinenschaufel nach Fertigstellung der Turbinenschaufel ohne Zerstörung derselben mit hoher Genauigkeit mit Bezug auf die Schaufelgeometrie ermittelt werden. Auf diese Weise ist eine häufige Überprüfung der Kernlage im Verlauf der fortschreitenden Serienfertigung möglich, ohne dass hierfür gefertigte Turbinenschaufeln zerstört werden müssten. Die Kontrolle der Kernlage bei der Fertigung der Turbinenschaufelserie kann daher sehr häufig erfolgen, so dass Abweichungen in der radialen Kernlage von der Soll-Lage oder der Soll-Orientierung frühzeitig entdeckt und korrigiert werden können. Auf diese Weise können die Wanddicken von Turbinenschaufeln während des gesamten Fertigungsprozesses sehr gut im optimalen Bereich gehalten werden, so dass eine hohe Zahl an möglichen Wiederaufbereitungen für die ganze Serie der Turbinenschaufeln gewährleistet werden kann. Darüber hinaus führt das Einhalten der optimierten Wanddicken dazu, dass auch thermodynamische Wärmeübergangszonen in den Turbinenschaufeln einer Serie sehr gut reproduzierbar optimiert werden können. Beides wirkt sich positiv auf die Lebensdauer der Turbinenschaufeln aus, da eine hohe Zahl von Wiederaufbereitungen gewährleistet werden kann und Hot Spots im Betrieb der Turbinenschaufeln zuverlässig vermieden werden können. Zudem ermöglicht es das erfindungsgemäße Verfahren die Kernlage nach Fertigstellung der Turbinenschaufel jederzeit zu ermitteln, also bspw. auch noch im Rahmen eines Wiederaufbereitungsprozesses nach einer Abnutzung der Turbinenschaufel im Betrieb. Auf diese Weise kann vor einer Wiederaufbereitung einer Turbinenschaufel die Kernlage mittels eines Koordinatenmesssystems gemessen werden und so die genaue Lage der Innenfläche ermittelt werden. Da auch die genaue Lage der Außenfläche durch eine Messung in demselben Bezugssystem wie die Lage der Innenfläche ermittelt werden kann, ist es möglich, aus der Lage der Innenfläche und der Lage der Außenfläche die aktuelle Wandstärke der Turbinenschaufel zu ermitteln, um feststellen zu können, wie viel Wandmaterial im Rahmen der Wiederaufbereitung maximal noch abgetragen werden kann. Eine derartige Information kann nützlich sein, um eine Entscheidung zu treffen, ob eine Wideraufbereitung der Turbinenschaufel noch möglich ist, ohne hierbei die minimal notwendige Wanddicke zu unterschreiten.

Der nach außen offene Hohlraum der mit dem erfindungsgemäßen Verfahren herzustellenden Turbinenschaufel kann wenigstens eine Öffnung in einer Außenfläche der Turbinenschaufel aufweisen. In einer vorteilhaften Ausgestaltung des Verfahrens weist der wenigstens eine Gusskern daher einen die wenigstens eine Öffnung formenden Gusskernabschnitt auf, und die wenigstens eine ebene Referenzfläche ist derart im die Öffnung formenden Gusskernabschnitt oder in der Nähe des die Öffnung formenden Gusskernabschnitts gebildet, dass die durch die ebene Referenzfläche in der Schaufelinnenfläche gebildete ebene Abtastfläche von Außerhalb der Turbinenschaufel für einen Messkopf einer Koordinatenmesseinrichtung leicht zugänglich ist. Durch die wenigstens eine Öffnung der Turbinenschaufel nach außen wird typischerweise auch das Gusskernmaterial beim thermischen oder chemischen Entfernen des Gusskerns aus dem Hohlraum der Turbinenschaufel abgeführt. Derartige Öffnungen sind in der Regel von außen leicht zugänglich, so dass dann auch die in diesem Bereich gebildeten Abtastflächen von außen ebenfalls leicht zugänglich sind.

Wenigstens eine der ebenen Referenzflächen kann insbesondere derart in einem eine Öffnung formenden Gusskernabschnitt gebildet sein, dass als Abtastfläche ein um die entsprechende Öffnung in der Außenfläche der Turbinenschaufel wenigstens teilweise umlaufender und gegenüber der Außenfläche der Turbinenschaufel zurückversetzter Absatz gebildet wird, der insbesondere auch vollständig um die Öffnung umlaufen kann. Ein derartiger Absatz ermöglicht nach dem Ermitteln der Kernposition anhand der Abtastfläche ein Einsetzen eines Bleches wie etwa eines Dichtbleches in die Öffnung ohne dass dieses über die Außenfläche des Schaufelfußes vorsteht. Im Rahmen eines Wiederaufbereitungsprozesses kann das Blech dann vor dem erneuten Ermitteln der Kernposition entfernt werden, falls die Abtastfläche zum Ermitteln der Kernposition benötigt wird. Bleche können bspw. zum Einsatz kommen, um eine Öffnung zu verschließen oder ihr eine spezielle Form zu geben. Das Verschließen einer Öffnung erfolgt bspw. dann, wenn diese beim Herstellen der Turbinenschaufel nur der Fixierung der Kernposition dient, nicht aber später dem Eintritt von Kühlluft in das Innere der Turbinenschaufel Verwendung findet. Derartige Löcher werden in der Regel mit Dichtblechen abgedichtet, wobei die Dichtbleche bisher auf die Außenseite des Schaufelfußes aufgebracht werden und daher in den Zwischenraum zwischen der Unterseite des Schaufelfußes und die Bodenfläche der Nut einer Rotorscheibe, in welche der Schaufelfuß eingesetzt wird, hineinragt. Dadurch wird jedoch der für die Strömung der Kühlluft im Zwischenraum zur Verfügung stehende Strömungsquerschnitt reduziert, was beim Auslegen des zwischen der Unterseite des Schaufelfußes und dem Nutboden gebildeten Strömungskanals berücksichtigt werden muss. Bei einem teilweisen Ablösen des Bleches würde dieses zudem in den Kühlluftstrom im Zwischenraum zwischen der Unterseite des Schaufelfußes und dem Nutboden ragen, was zu Leckage und Verwirbelungen führen kann. Wenn das Dichtblech dagegen aufgrund der Ausgestaltung der Abtastfläche als Rücksprung gegenüber der Außenfläche des Schaufelfußes in die Unterseite des Schaufelfußes versenkt ist und daher nicht über Außenfläche vorsteht, wird der Strömungsquerschnitt durch das Dichtblech nicht reduziert, so dass der Abstand zwischen der Unterseite des Schaufelfußes und der Bodenfläche der Nut verringert werden kann oder weniger Druck zum Aufrecht erhalten der Strömung benötigt wird. Außerdem kann durch das Versenken des Dichtbleches vermieden werden, dass ein teilweise abgelöstes Dichtblech in den Strömungskanal hineinragt, wodurch Wirbelbildung besser vermieden werden kann.

Im erfindungsgemäßen Verfahren kann der wenigstens eine Gusskern insbesondere eine ebene Referenzfläche mit einer in der Radialrichtung der herzustellenden Turbinenschaufel oder einer entgegen der Radialrichtung der herzustellenden Turbinenschaufel verlaufenden Flächennormalen aufweisen. Zusätzlich oder alternativ kann der wenigstens eine Gusskern eine ebene Referenzfläche mit einer in der Axialrichtung der herzustellenden Turbinenschaufel oder entgegen der Axialrichtung der herzustellenden Turbinenschaufel verlaufenden Flächennormalen aufweisen. Weiter zusätzlich oder alternativ kann der wenigstens eine Gusskern eine ebene Referenzfläche mit einer in der Umfangsrichtung der herzustellenden Turbinenschaufel oder entgegen der Umfangsrichtung der herzustellenden Turbinenschaufel verlaufenden Flächennormalen aufweisen. Beispielsweise kann ein Gusskern zum Formen eines entgegen der Radialrichtung der herzustellenden Turbinenschaufel offenen Hohlraums dienen. In diesem Fall bietet es sich an, wenn der Gusskern wenigstens eine ebene Referenzfläche mit einer in der Radialrichtung der herzustellenden Turbinenschaufel verlaufenden Flächennormalen aufweist, so dass die mit Hilfe der Referenzfläche geformte Abtastfläche eine entgegen der Radialrichtung verlaufende Flächennormale aufweist. Derartige, entgegen der Radialrichtung der herzustellenden Turbinenschaufel offene Hohlräume sind beispielsweise Hohlräume für Kühlluft zum Kühlen von Laufschaufeln von Gasturbinenanlagen, welche Öffnungen zur Zufuhr der Kühlluft im Schaufelfuß aufweisen. Durch die Öffnung kann dann der Messkopf einer Koordinatenmesseinrichtung die Abtastfläche erreichen. Aber auch Leitschaufeln von Gasturbinenanlagen weisen an ihren beiden radialen Enden typischerweise Öffnungen für die Zu- und Abfuhr von Kühlluft auf, so dass auch der Hohlraum einer Leitschaufel häufig entgegen der Radialrichtung offen ist. In einem anderen Beispiel dient ein Gusskern zum Formen eines in der Radialrichtung der herzustellenden Turbinenschaufel offenen Hohlraums, und der Gusskern weist eine ebene Referenzfläche mit einer entgegen der Radialrichtung der herzustellenden Turbinenschaufel verlaufenden Flächennormalen auf. Die Referenzfläche formt dann eine Abtastfläche, deren Flächennormale in Radialrichtung verläuft. Ein in Radialrichtung offener Hohlraum kann beispielsweise, wie oben bereits erwähnt, Öffnung zur Zu- bzw. Abfuhr von Kühlluft in den radial entgegengesetzten Enden einer Leitschaufel für eine Gasturbine aufweisen. Aber auch Laufschaufeln von Gasturbinen können in Radialrichtung offene Hohlräume aufweisen. Hier ist beispielsweise die Krone einer Laufschaufel zu nennen, in welcher eine Vertiefung in der Schaufelspitze durch in Radialrichtung vorstehende Wände des Schaufelblatts gebildet ist. In beiden Fällen kann die Abtastfläche für den Messkopf einer Koordinatenmesseinrichtung leicht zugänglich angeordnet werden.

Gemäß eines zweiten Aspekts der vorliegenden Erfindung wird ein Verfahren zum Ermitteln der Lage eines beim Gießen einer Turbinenschaufel verwendeten Gusskerns nach dem Fertigstellen der Turbinenschaufel zur Verfügung gestellt. Das Ermitteln der Lage des beim Gießen einer Turbinenschaufel verwendeten Gusskerns kann dann bspw. im Rahmen eines Wiederaufarbeitungsprozesses nach einem Betrieb der Turbinenschaufel zur Anwendung kommen. Im Rahmen des erfindungsgemäßen Verfahrens findet eine Turbinenschaufel Verwendung, die nach dem erfindungsgemäßen Verfahren zum Herstellen von Turbinenschaufeln hergestellt worden ist. In einer solchen Turbinenschaufel wird die wenigstens eine ebene Abtastfläche in der Schaufelinnenfläche mit dem Messkopf einer Koordinatenmessung abgetastet, um die Lage und/oder die Orientierung der wenigstens einen ebenen Abtastfläche zu ermitteln. Dies kann bspw. zum Beginn eines Wiederaufbereitungsprozesses für die Turbinenschaufel erfolgen. Aus der ermittelten Lage und/oder Orientierung der wenigstens einen ebenen Abtastfläche wird dann die Lage und/oder Orientierung des beim Gießen der Turbinenschaufel verwendeten Gusskerns ermittelt. Durch das Abtasten der ebenen Abtastfläche mit dem Messkopf der Koordinatenmesseinrichtung können die Lage und/oder die Orientierung in Bezug auf das Koordinatensystem, in dem die Schaufelgeometrie definiert ist, gemessen werden woraus auf die genaue Lage und/oder die genaue Orientierung des Gusskerns in Bezug auf die Schaufelgeometrie ermittelt werden kann bzw. können. Aus der Lage und/oder der Orientierung des Gusskerns beim Gießen der Turbinenschaufel lässt sich wiederum die Wanddicke zwischen der von der Außenfläche des Gusskerns geformten Schaufelinnenfläche und der Schaufelaußenfläche ermitteln. Dies alles ist ohne Zerstörung der Turbinenschaufel, an der die Messung vorgenommen wird, möglich. Es können daher im Rahmen einer Serienfertigung viele Turbinenschaufeln im Hinblick auf die Lage des Gusskerns, insbesondere im Hinblick auf die radiale Lage des Gusskerns, während des Gießens der Turbinenschaufel überprüft werden, so dass das erfindungsgemäße Verfahren ermöglicht, Abweichungen der Lage oder der Orientierung des Gusskerns während des Gießens der Turbinenschaufeln von der Soll-Lage bzw. Soll-Orientierung frühzeitig zu ermitteln. Zudem kann das Ermitteln der Lage des Gusskerns auch später noch jederzeit, etwa im Rahmen eines Wideraufbereitungsprozesses, erfolgen. Dies wirkt sich positiv auf die Lebensdauer der Turbinenschaufeln aus. Wenn drei zueinander nicht parallele ebene Abtastflächen vorhanden sind, lassen sich Lage und Orientierung des Gusskerns, mit dem die Abtastflächen geformt wurden, in allen drei translatorischen und allen drei rotatorischen Freiheitsgraden ermitteln.

Gemäß eines dritten Aspekts der vorliegenden Erfindung wird eine Turbinenschaufel mit einer in einem Koordinatensystem definierten Schaufelgeometrie und wenigstens einem nach außen offenen, eine Schaufelinnenfläche aufweisenden Hohlraum zur Verfügung gestellt. In der Schaufelinnenfläche der Turbinenschaufel ist wenigstens eine ebene für den Messkopf einer Koordinatenmesseinrichtung zugängliche Abtastfläche für eine Koordinatenmesseinrichtung ausgebildet, welcher eine definierte Soll-Lage und eine definierte Soll-Orientierung in Bezug auf ein Koordinatensystem, in dem die Schaufelgeometrie definiert ist, zugeordnet ist. Die erfindungsgemäße Turbinenschaufel kann insbesondere mit dem erfindungsgemäßen Verfahren zum Herstellen von Turbinenschaufeln hergestellt werden. Die mit Bezug auf das Herstellungsverfahren erläuterten Eigenschaften und Vorteile sind daher in der erfindungsgemäßen Turbinenschaufel verwirklicht. Außerdem kann die erfindungsgemäße Turbinenschaufel im erfindungsgemäßen Verfahren zum Ermitteln der Lage eines beim Gießen der Turbinenschaufel verwendeten Gusskerns nach dem Gießen der Turbinenschaufel Verwendung finden. Dabei ist es vorteilhaft, wenn sich die ebene Abtastfläche derart in oder in der Nähe einer in einer Außenfläche der Turbinenschaufel vorhandenen Öffnung des nach außen offenen Hohlraums befindet, dass sie von Außerhalb der Turbinenschaufel für einen Messkopf einer Koordinatenmesseinrichtung leicht zugänglich ist.

In der erfindungsgemäßen Turbinenschaufel kann die Schaufelinnenfläche wenigstens eine ebene Abtastfläche aufweisen, deren Flächennormale in der Radialrichtung der Turbinenschaufel oder entgegen der Radialrichtung der Turbinenschaufel verläuft. Zusätzlich oder alternativ kann die Schaufelinnenfläche wenigstens eine ebene Abtastfläche aufweisen, deren Flächennormale in der Axialrichtung der Turbinenschaufel oder entgegen der Axialrichtung der Turbinenschaufel verläuft. Weiter zusätzlich oder alternativ kann die Schaufelinnenfläche wenigstens eine ebene Abtastfläche aufweisen, deren Flächennormale in der Umfangsrichtung der Turbinenschaufel oder entgegen der Umfangsrichtung der Turbinenschaufel verläuft. Wenn sowohl eine ebene Abtastfläche, deren Flächennormale in der Radialrichtung oder entgegen der Radialrichtung verläuft, eine ebene Abtastfläche, deren Flächennormale in Axialrichtung oder entgegen Axialrichtung der Turbinenschaufel verläuft und eine ebene Abtastfläche, deren Flächennormale in Umfangsrichtung der Turbinenschaufel oder entgegen der Umfangrichtung der Turbinenschaufel verläuft, vorhanden sind, ist eine genaue Ermittlung der Lage und/oder der Orientierung des Gusskerns bezogen auf das Koordinatensystem, in dem die Schaufelgeometrie definiert ist, in allen translatorischen und rotatorischen Freiheitsgraden möglich. Wenn jedoch lediglich die Lage und die Orientierung des Gusskerns in Radialrichtung oder in Axialrichtung oder in Umfangsrichtung benötigt wird, reicht es aus, eine ebene Abtastfläche vorzusehen, deren Flächennormale in Radialrichtung oder entgegen der Radialrichtung der Turbinenschaufel verläuft bzw. eine Abtastfläche vorzusehen, deren Flächennormale in der Axialrichtung oder entgegen der Axialrichtung der Turbinenschaufel verläuft bzw. eine Abtastfläche vorzusehen, deren Flächennormale in der Umfangsrichtung oder entgegen der Umfangsrichtung der Turbinenschaufel verläuft. Dadurch, dass die Abtastfläche eine ebene Fläche ist, kann durch Abtasten wenigstens dreier Punkte der Abtastfläche nicht nur eine Verschiebung der Soll-Lage in oder entgegen der jeweiligen normalen Richtung detektiert werden, sondern auch eine Drehung der Orientierung der normalen Richtung in Bezug auf die Soll-Orientierung.

Typischerweise ist die radiale Kernlage während des Gießens der Turbinenschaufel von besonderem Interesse. Wenn der nach außen offene Hohlraum entgegen der Radialrichtung der Turbinenschaufel offen ist, kann die ebene Abtastfläche insbesondere eine entgegen der Radialrichtung der Turbinenschaufel verlaufene Flächennormale aufweisen. Dies kann beispielsweise realisiert sein, wenn die Turbinenschaufel eine Laufschaufel ist, die im Schaufelfuß eine oder mehrere Kühlluftöffnungen zur Zufuhr von Kühlluft in die Laufschaufel aufweist. Aber auch bei Leitschaufeln von Gasturbinen können Hohlräume vorhanden sein, die entgegen der Radialrichtung der Turbinenschaufel offen sind und beispielsweise zur Zu- oder Abfuhr von Kühlluft dienen. Wenn der nach außen offene Hohlraum dagegen in der Radialrichtung offen ist, kann die wenigstens eine ebene Abtastfläche insbesondere eine in der Radialrichtung der Turbinenschaufel verlaufende Flächennormale aufweisen. Diese Variante ist insbesondere von Bedeutung, wenn die Kernlage von Gusskernen zum Herstellen einer Krone an der Schaufelspitze einer Laufschaufel einer Gasturbine ermittelt werden soll. Aber auch bei Leitschaufeln von Gasturbinen sind häufig Hohlräume vorhanden, die in Radialrichtung der Turbinenschaufel offen sind. Diese können beispielsweise zur Zu- oder Abfuhr von Kühlluft dienen. Auch in diesem Fall ist eine Abtastfläche mit einer in Radialrichtung der Leitschaufel verlaufenden Flächennormalen vorteilhaft.

In einer Weiterbildung der erfindungsgemäßen Turbinenschaufel ist die Öffnung mit einem Blech versehen, das auf der Abtastfläche anliegt, etwa um der Öffnung eine bestimmte Form zu geben oder die Öffnung zu verschließen. Das Verschließen einer Öffnung erfolgt wie bereits beschrieben bspw. dann, wenn diese beim Herstellen der Turbinenschaufel nur der Fixierung der Kernposition dient, nicht aber später dem Eintritt von Kühlluft in das Innere der Turbinenschaufel.

Bei wenigstens einer Öffnung in der Außenfläche der Turbinenschaufel, insbesondere des Schaufelfußes, kann die Abtastfläche ein um die Öffnung umlaufender, gegenüber der Außenfläche der Turbinenschaufel zurückversetzter Absatz sein. Dies ermöglicht bspw. das Versenken eines der zuvor beschriebenen Dichtbleche in die Turbinenschaufel, insbesondere in die Unterseite des Schaufelfußes.

Außerdem wird eine Gasturbine mit einer erfindungsgemäßen Turbinenschaufel zur Verfügung gestellt.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein Ausführungsbeispiel für eine erfindungsgemäße Turbinenschaufel, das eine erfindungsgemäß ausgebildete Laufschaufel einer Gasturbine darstellt.
- Figur 2: zeigt schematisch einen ersten Gusskern für die Herstellung der in Figur 1 gezeigten Turbinenschaufel.
- Figur 3: zeigt schematisch einen Ausschnitt eines zweiten Gusskerns für die Herstellung der Turbinenschaufel aus Figur 1.
- Figur 4: zeigt ein zweites Ausführungsbeispiel für eine erfindungsgemäße Turbinenschaufel, das eine erfindungsgemäß ausgebildete Laufschaufel einer Gasturbine darstellt.
- Figur 5: zeigt schematisch einen Gusskern für die Herstellung der in Figur 4 gezeigten Turbinenschaufel.
- Figur 6: zeigt eine Öffnung im Schaufelfuß einer Turbinenschaufel.
- Figur 7: zeigt ein in die Öffnung aus Figur 6 einzusetzendes Blech.

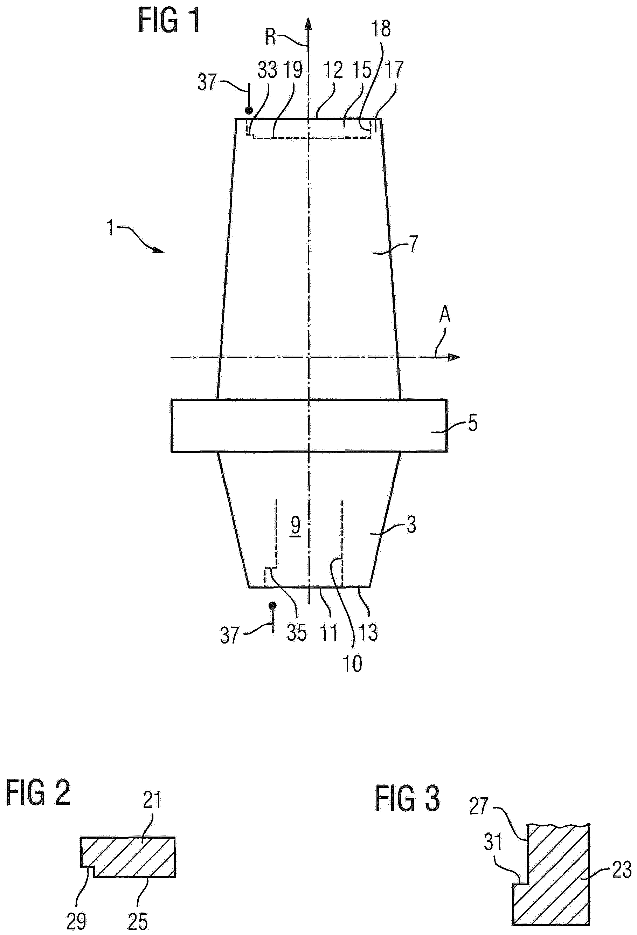

Ein Ausführungsbeispiel für die Erfindung wird nachfolgend anhand von Figur 1 beschrieben. Die Figur zeigt eine erfindungsgemäß ausgebildete Turbinenschaufel 1, die im vorliegenden Ausführungsbeispiel aus Laufschaufel einer Gasturbine ausgebildet ist. Die gezeigte Turbinenschaufel 1 umfasst einen Schaufelfuß 3, eine Schaufelplattform 5 und ein Schaufelblatt 7, wobei sich der Schaufelfuß 3 und das Schaufelblatt 7 von entgegengesetzten Seiten der Schaufelplattform aus im Wesentlichen in entgegengesetzte Richtungen erstrecken. Die Turbinenschaufel 1 weist eine Radialrichtung R auf, welche der Radialrichtung der Turbine entspricht, wenn die Turbinenschaufel 1 in eine Turbine eingebaut ist. Darüber hinaus weist die Turbinenschaufel 1 eine Axialrichtung A, welche der Axialrichtung der Turbine entspricht, wenn die Turbinenschaufel 1 in eine Turbine eingebaut ist, und eine Umfangsrichtung, die senkrecht zur Radialrichtung R und senkrecht zur Axialrichtung A verläuft und die einer Tangente der Umfangsrichtung am Ort der Turbinenschaufel entspricht, wenn die Turbinenschaufel in eine Turbine eingebaut ist, auf.

Die Turbinenschaufel 1 umfasst im vorliegenden Ausführungsbeispiel zwei Hohlräume, die nach außen hin offen sind, d.h. durch Öffnungen 11, 12 in der Außenfläche der Turbinenschaufel 1 zugänglich sind. Der erste dieser Hohlräume ist der im Bereich des Schaufelfußes 3 teilweise gestrichelt dargestellte Hohlraum 9, der sich durch den Schaufelfuß 3, die Schaufelplattform 5 und das Schaufelblatt 7 erstreckt und durch den beim Betrieb der Turbine, in die die Turbinenschaufel 1 eingebaut ist, Kühlluft zum Kühlen der Turbinenschaufel 1 geleitet wird. Die Kühlluft kühlt die Schaufel und kann beispielsweise durch Kühlluftöffnungen hauptsächlich im Bereich des Schaufelblattes 7 (nicht dargestellt) aus der Turbinenschaufel 1 wieder austreten, bspw. um einen Kühlluftfilm über Oberflächenbereiche der Turbinenschaufel zu bilden.

Der zweite Hohlraum ist in der Schaufelspitze durch eine Vertiefung 15 gebildet, die von einer über den Boden der Vertiefung 15 vorstehenden Wand 17 begrenzt ist. Die Vertiefung 15 bildet zusammen mit der Wand 17 eine sogenannte Krone der Turbinenschaufel 1 und weist eine Öffnung 12 in Radialrichtung R der Turbinenschaufel 1 auf.

Das Herstellen der Turbinenschaufel 1 erfolgt durch ein Gussverfahren, in dem eine Gießform mit zwei Gusskernen Verwendung findet. Die Gusskerne weisen dabei jeweils eine Gusskernaußenfläche auf, die eine komplementäre Form der Innenfläche des zu bildenden Hohlraums darstellt. Beim Gießprozess werden die Gusskerne in die die Formschalen für die Schaufelaußenfläche eingelegt und bilden die Form für die Schaufelinnenflächen, also die Innenflächen des Hohlraums 9, die Bodenfläche 19 und die Innenflächen der Kronenwände 17. Die Gusskerne 21 und 23 sind schematisch in den Figuren 2 und 3 dargestellt, wobei Figur 2 den Gusskern 21 für die Vertiefung 15 zeigt und Figur 3 einen Ausschnitt des Gusskerns 23 für den Kühlluftkanal 9 zeigt. Die Gusskernaußenflächen 25, 27 formen beim Gießen der Turbinenschaufel 1 die Bodenfläche 19 der Vertiefung der Kronenwände 17 bzw. die Innenfläche 10 des Kühlluftkanals 9.

Die in Figur 2 und Figur 3 dargestellten Gusskerne 21, 23 weisen jeweils eine ebene Referenzfläche 29, 31 auf, wobei im vorliegenden Ausführungsbeispiel die ebene Referenzfläche 29 des Gusskerns 21 für die Vertiefung 15 eine Flächennormale aufweist, die entgegen der Radialrichtung R der Turbinenschaufel 1 ausgerichtet ist, wenn der Gusskern in die Gießform für die Turbinenschaufel 1 eingesetzt ist. Der Gusskern 23 für den Kühlluftkanal 9 weist ebenfalls eine ebene Referenzfläche 31 auf. Im Unterschied zur ebenen Referenzfläche 29 des Gusskerns 21 ist die ebene Referenzfläche 31 des Gusskerns 32 jedoch so orientiert, dass ihre Flächennormale in Radialrichtung R der Turbinenschaufel 1 zeigt, wenn der Gusskern in die Gießform für die Turbinenschaufel 1 eingesetzt ist.

Zum Gießen der Turbinenschaufel 1 werden die Gusskerne 21, 23 in die Form für die Turbinenschaufel 1 integriert, und anschließend wird eine flüssige Superlegierung, typischerweise eine Superlegierung auf Nickel-, Kobalt- oder Eisenbasis, in die Form eingefüllt. Nach dem Erstarren der Superlegierung wird die Form von der Turbinenschaufel abgenommen und anschließend die Gusskerne 21, 23 thermisch oder chemisch aus der Vertiefung 15 bzw. dem Kühlluftkanal 9 entfernt, so dass die Innenflächen der Hohlräume 9, 15, also die Innenfläche 10 des Kühlluftkanals 9 sowie die Bodenfläche 19 und die inneren Wandflächen 16 der Kronenwände 17, freigelegt werden.

Wie bereits erwähnt, weisen die Gusskerne 21, 23 ebene Referenzflächen 29, 31 auf, deren Flächennormalen mit Bezug auf das Koordinatensystem, in dem die Schaufelgeometrie definiert ist, definierte Orientierungen aufweisen, wenn sich die Gusskerne 21, 23 in den Hohlräumen der Turbinenschaufeln 1 befinden. Da die Gussaußenflächen 25, 27 zu den Schaufelinnenflächen komplementäre Flächen sind, weisen die mit dem Gusskernen 21, 23 geformten Schaufelinnenflächen ebenfalls ebene Flächen mit definierter Orientierung der Flächennormalen auf. Im Falle des Gusskerns 21 für die Vertiefung 15 in der Schaufelspitze formt die Referenzfläche 29 eine ebene Fläche 33, deren Flächennormale parallel zur Radialrichtung R der Turbinenschaufel ausgerichtet ist. Die ebene Referenzfläche 31 des Gusskerns 23 formt in der Nähe der Öffnung 11 in der Unterseite 13 des Schaufelfußes 3 eine ebene Fläche 35, deren Flächennormale antiparallel zur Radialrichtung R der Turbinenschaufel ausgerichtet ist. Diese beiden ebenen Flächen, d.h. die ebene Fläche 33 in der Vertiefung 15 und die ebene Fläche 35 im Bereich der Öffnung 11 an der Unterseite 13 des Schaufelfußes 3, stellen leicht zugängliche ebene Abtastflächen für die Abtastung mit dem Messkopf 37 einer Koordinatenmesseinrichtung dar.

Wenn die Gusskerne 21, 23 korrekt in der Gießform für das Gießen der Turbinenschaufel 1 eingesetzt sind, ist die Flächennormale also parallel zur Radialrichtung ausgerichtet und die Flächennormale der ebenen Abtastfläche 35 entgegen der Radialrichtung. Außerdem weisen beide Abtastflächen eine definierte radiale Lage auf. Wenn dagegen Abweichungen der Gusskerne 21, 23 von ihrer Soll-Lage und/oder der Soll-Orientierung in der Gießform zum Gießen der Turbinenschaufel 1 auftreten, spiegelt sich dies in der radialen Lage und/oder der Orientierung der ebenen Abtastflächen 33, 35 in der Vertiefung 15 bzw. im Kühlluftkanal 9 in Bezug auf die Schaufelgeometrie wieder. Mit der Koordinatenmesseinrichtung kann bzw. können die Lage und/oder die Orientierung der jeweiligen ebenen Abtastflächen in Bezug auf die Schaufelgeometrie ermittelt werden. Da die ebenen Abtastflächen 33, 35 zu den ebenen Referenzflächen 29, 31 der Gusskerne 21, 23 komplementäre Flächen darstellen, können aus der mit dem Messkopf 37 abgetasteten Lage und Orientierung der ebenen Abtastflächen 33, 35 die Lage und Orientierung der Gusskerne 21, 23 während des Gießprozesses ermittelt werden.

Falls beim Gießprozess Abweichungen der Lage und/oder der Orientierung der Gusskerne 21,23 von ihrer Soll-Lage bzw. Soll-Orientierung aufgetreten sind, kann dies also an der fertigen Turbinenschaufel festgestellt werden. Da das Feststellen der Lage und/oder der Orientierung der Gusskerne beim Gießen der Turbinenschaufel 1 an der fertigen Turbinenschaufel 1 zerstörungsfrei ermittelt werden kann, kann eine hohe Zahl von Turbinenschaufeln während einer Serienfertigung stichprobenartig untersucht werden, so dass Überprüfungen von Turbinenschaufeln in zeitlich kurzen Abständen realisierbar sind. Auf diese Weise können während der Serienfertigung auftretende Veränderungen in der Lage und/oder der Orientierung der Gusskerne 21, 23 frühzeitig festgestellt werden, was eine zeitnahe Korrektur der Lage und/oder Orientierung der Gusskerne für die nachfolgenden Gießprozesse der Serienfertigung ermöglicht. Auftretende Abweichungen in Lage und/oder Orientierung der Gusskerne 21, 23 können dadurch korrigiert werden, bevor sie ein vorgegebenes Maß überschreiten, wodurch sich die Qualität der in Serie gefertigten Turbinenschaufeln insbesondere im Hinblick auf ihre Wandabmessungen sowie im Hinblick auf ihre thermodynamischen Übergangszonen verbessern lassen. Besonders kritische Wandabmessungen sind dabei die Wanddicken im Bereich des Schaufelblattes bzw. die Wanddicke im Bereich der Bodenfläche 19 der Vertiefung 15, die auch Kronenbodenhöhe genannt wird.

Obwohl im vorliegenden Ausführungsbeispiel die Referenzflächen der Gusskerne 21, 23 Flächennormalen mit einer Orientierung aufweisen, die parallel bzw. antiparallel zur Radialrichtung verläuft, können die Gusskerne 21, 23 zusätzlich oder alternativ auch Referenzflächen aufweisen, deren Flächennormale parallel oder antiparallel zur Axialrichtung A der Turbinenschaufel 1 verlaufen. Die mit derartigen ebenen Referenzflächen geformten ebenen Abtastflächen weisen dann Flächennormalen auf, die bei korrekter Lage und Orientierung der Gusskerne 21, 23 antiparallel bzw. parallel zur Axialrichtung verlaufen. Ebenso besteht die Möglichkeit zusätzlich oder alternativ in den Gusskernen 21, 23 ebene Referenzflächen vorzusehen, deren Flächennormale parallel oder antiparallel zur Umfangsrichtung der Turbinenschaufel 1 verlaufen. Die damit geformten ebenen Abtastflächen in den Innenflächen der Turbinenschaufel weisen dann Flächennormalen auf, die antiparallel bzw. parallel zur Umfangsrichtung der Turbinenschaufel 1 verlaufen.

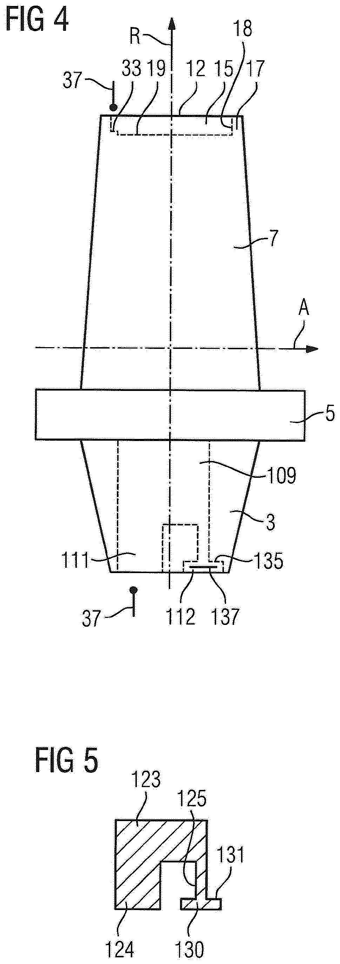

Ein zweites Ausführungsbeispiel für die Erfindung wird nachfolgend anhand von Figur 4 beschrieben. Die Figur zeigt eine erfindungsgemäß ausgebildete Turbinenschaufel 100, die wie im ersten Ausführungsbeispiel aus Laufschaufel einer Gasturbine ausgebildet ist. Elemente der Turbinenschaufel aus Figur 4, die Elementen der Turbinenschaufel aus Figur 1 entsprechen sind mit denselben Bezugsziffern wie in Figur 1 bezeichnet und werden nicht noch einmal erläutert, um Wiederholungen zu vermeiden. Die Beschreibung des zweiten Ausführungsbeispiels beschränkt sich entsprechend auf die Unterscheide zum ersten Ausführungsbeispiel.

Die Turbinenschaufel des zweiten Ausführungsbeispiels unterscheidet sich von der des ersten Ausführungsbeispiels im Wesentlichen dadurch, dass neben wenigstens einer Öffnung 111 des Kühlluftkanals 109, die zum Zuführen von Kühlluft in den Kühlluftkanal 109 dient, auch wenigstens eine Öffnung 112 im Schaufelfuß 3 vorhanden ist, die nicht der Zufuhr von Kühlluft in den Kühlluftkanal 9 dient, sondern lediglich eine Hilfsöffnung darstellt, die während des Fertigungsprozesses für die Turbinenschaufel 1 zum Fixieren des Gusskerns 123 dient. Diese Hilfsöffnung 112 weist eine Abtastfläche 135 auf, die im vorliegenden Ausführungsbeispiel als um die Hilfsöffnung 112 umlaufender ebener Rücksprung 135 ausgebildet ist. Dadurch ist die Hilfsöffnung 112 von einer Vertiefung umgeben, in die nach dem Fertigstellen der Turbinenschaufel 1 und nach dem Abtasten der Abtastfläche zum Ermitteln der Kernlage ein Dichtblech 137 versenkt werden kann. Ads Dichtblech 137 kann dann bspw. mittels Punktlötens oder Punktschweißens an der Abtastfläche 135 fixiert werden. Durch die Lage des Dichtbleches 137 in der Vertiefung steht es nicht über die Unterseite 13 des Schaufelfußes vor, so dass das Dichtblech 137 den zwischen der Unterseite 13 des Schaufelfußes und dem Nutboden einer Rotorscheibennut, in welche die Turbinenschaufel 1 eingesetzt wird (nicht dargestellt), gebildeten Kühlluftströmungskanal nicht beeinträchtigt. Im Übrigen unterscheidet sich die Turbinenschaufel 101 des zweiten Ausführungsbeispiels nicht von der Turbinenschaufel 1 des ersten Ausführungsbeispiels.

Ein Gusskern 123, wie er zum Herstellen der in Figur 4 gezeigten Turbinenschaufel Verwendung finden kann, ist in Figur 5 dargestellt. Dieser umfasst einen ersten Kernfortsatz 124 zum Herstellen der Öffnung 111 und einen zweiten Kernfortsatz 125 zum Herstellen der Öffnung 112. Falls mehr als zwei Öffnungen gebildet werden sollen, weist der Kern 123 eine entsprechende Anzahl an Kernfortsätzen auf. Im vorliegenden Ausführungsbeispiel weist der zweite Kernfortsatz 125 an seinem äußeren Ende eine Verbreiterung 130 auf, die mit einer umlaufenden ebenen Fläche 131 ausgestattet ist, die zum Ausbilden der umlaufenden Abtastfläche 135 dient. Da die Hilfsöffnung 112 im vorliegenden Ausführungsbeispiel nach radial innen Offen ist, zeigt die Flächennormale dieser umlaufenden ebenen Fläche 131 nach radial außen. Im Übrigen unterscheidet sich der Gusskern 123 des zweiten Ausführungsbeispiels nicht vom Gusskern 23 des ersten Ausführungsbeispiels.

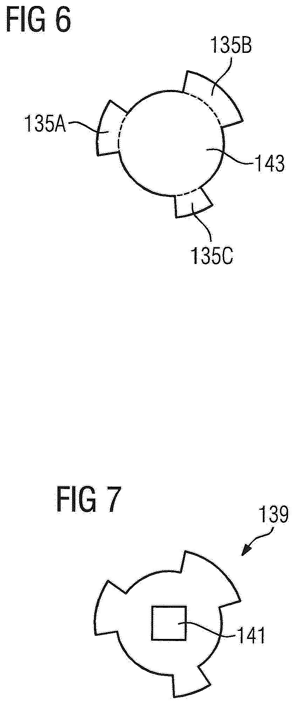

Im vorliegenden Ausführungsbeispiel kann die Hilfsöffnung auch eine Kühllufteintrittsöffnung in den internen Kühlluftkanal 109 der Turbinenschaufel 1 sein. In diesem Fall kann die um die Kühllufteintrittsöffnung herum gebildete Vertiefung statt eines Dichtbleches ein Blech aufnehmen, welches dem Definieren eines bestimmten Strömungsquerschnittes für die Strömung durch die Öffnung hindurch in den internen Kühlluftkanal dient. Im vorliegenden Ausführungsbeispiel besteht die Möglichkeit, ein Dichtblech oder ein einen bestimmten Strömungsquerschnitt definierendes Blech 139 auch dann einzusetzen, wenn die Abtastfläche zwar eine gegenüber dem Außenfläche des Schaufelfußes 3 zurückversetzte, aber keine vollständig um die Öffnung 143 umlaufende Fläche 135A, 135B, 135C ist (siehe Figuren 6). Auf diese Weise kann durch eine bestimmte Positionierung der Abtastflächen 135A, 135B, 135C am Rand der Öffnung 143 eine bestimmte Orientierung eines Bleches 139 beim Einsetzen des Bleches vorgegeben werden, bspw. um die Orientierung eines Strömungsquerschnittes festzulegen 141. Wenn die Abtastfläche außerdem zum Fixieren des Bleches dient, ist es vorteilhaft, wenn wenigstens zwei teilweise um die Öffnung umlaufende Abtastflächen vorhanden sind. Diese können vorteilhafterweise einander gegenüber liegen. Bei einer kreisförmigen Öffnung können dann bspw. drei Abtastflächen 135A, 135B, 135C vorhanden sein, die jeweils in einem bestimmten Winkel um die Öffnung umlaufen und gleichmäßig oder Ungleichmäßig um die Öffnung herum verteilt sind (siehe Figur 7). Insbesondere können die Anzahl und/oder die Größe derartiger um eine Öffnung herum angeordneter Abtastflächen 135A, 135B, 135C zwischen verschiedenen Baureihen von Turbinenschaufeln oder zwischen verschiedenen Öffnungen in einer Turbinenschaufel variieren. Auf diese Weise kann der Rand der Öffnung als eine Art Schloss dienen, in die nur bestimmte Bleche in Art eines Schlüssels einsetzbar sind.

Die vorliegende Erfindung wurde anhand von Ausführungsbeispielen zu Erläuterungszwecken ausführlich beschrieben. Ein Fachmann erkennt jedoch, dass Abweichungen von den beschriebenen Ausführungsformen möglich sind. So ist es z.B. möglich, dass die Flächennormale einer Referenzfläche eines Gusskerns eine andere Orientierung als die im Rahmen des Ausführungsbeispiels genannten Orientierungen aufweist. Die genannten Orientierungen sind jedoch im Hinblick auf das Koordinatensystem, in dem die Schaufelgeometrie der Turbinenschaufel 1 definiert ist, vorteilhaft. Ebenso kann die Erfindung auch im Rahmen von anderen Turbinenschaufeln als der dargestellten Laufschaufel einer Gasturbine Verwendung finden. Beispielsweise weisen Leitschaufeln von Gasturbinen typischerweise wenigstens einen Hohlraum mit zwei Öffnungen auf, die sich an radial entgegengesetzten Enden der Leitschaufel im Bereich der Kopfblätter der Leitschaufeln befinden. Diese Öffnungen dienen in der Regel als Eintritts- und Austrittsöffnungen für Kühlluft zum Kühlen der Leitschaufeln. Im Bereich der Eintrittsöffnung und/oder im Bereich der Austrittöffnung können mittels einer oder mehrerer ebenen Referenzflächen ebene Abtastflächen zum Ermitteln der Lage und Orientierung des Gusskerns oder bei Verwendung mehrerer Gusskerne der Gusskerne geformt werden. Außerdem kann die mit Bezug auf das zweite Ausführungsbeispiel beschriebe, eine Vertiefung bildende Abtastfläche auch dann vorhanden sein, wenn im Schaufelfuß lediglich eine einzige Kühllufteintrittsöffnung in den Kühlluftkanal vorhanden ist. Außerdem ist das Einbringen eines Bleches in die von der Abtastfläche gebildeten Vertiefung nicht zwingend nötig. Weiterhin besteht grundsätzlich die Möglichkeit, bei Turbinenschaufeln mit hinterschnittener Abströmkante die für das Ausformen der Hinterschneidung verwendeten Gusskerne so auszugestalten, dass im Bereich der Hinterschneidung ebene Abtastflächen gebildet werden. Die vorliegende Erfindung soll daher nicht auf spezielle Merkmalskombinationen des Ausführungsbeispiels beschränkt sein, sondern lediglich durch die beigefügten Ansprüche.

## Patentansprüche

1. Verfahren zum Herstellen von Turbinenschaufeln (1) mit einer in einem Koordinatensystem definierten Schaufelgeometrie und wenigstens einem nach außen offenen, eine Schaufelinnenfläche (10, 18, 19) aufweisenden Hohlraum (9, 15), in dem die Turbinenschaufeln (1) gegossen werden,
wobei der wenigstens eine nach außen offene Hohlraum (9, 15) mittels wenigstens eines Gusskerns (21, 23) geformt wird, der eine die Schaufelinnenfläche (10, 18, 19) formende Gusskernaußenfläche (25, 27) aufweist und der nach dem Gießprozess aus dem Hohlraum (9, 15) entfernt wird, wobei
die Gusskernaußenfläche (25, 27) wenigstens eine ebene Referenzfläche (29, 31) mit definierter Soll-Lage und/oder definierter Soll-Orientierung in Bezug auf das Koordinatensystem, in dem die Schaufelgeometrie definiert ist, aufweist,
**dadurch gekennzeichnet, dass**
die ebene Referenzfläche (29, 31) derart in der Gusskernfläche (25, 27) angeordnet ist, dass sie in der Schaufelinnenfläche (10, 18, 19) wenigstens eine für einen Messkopf (37) einer Koordinatenmesseinrichtung zugängliche ebene Abtastfläche (33, 35) formt.

2. Verfahren nach Anspruch 1,
**dadurch gekennzeichnet, dass**
der nach außen offene Hohlraum (9, 15) wenigstens eine Öffnung (11, 12) in einer Außenfläche der Turbinenschaufel (1) aufweist, der wenigstens eine Gusskern (21, 23) einen die wenigstens eine Öffnung (11 ,12) formenden Gusskernabschnitt aufweist und die wenigstens ebene Referenzfläche (29, 31) derart im oder in der Nähe des die Öffnung (11, 12) formenden Gusskernabschnitts gebildet ist, dass die durch die wenigstens eine ebene Referenzfläche (29, 31) in der Schaufelinnenfläche (10, 18, 19) geformte wenigstens eine ebene Abtastfläche (33, 35) von außerhalb der Turbinenschaufel (1) für einen Messkopf (37) einer Koordinatenmesseinrichtung zugänglich ist.

3. Verfahren nach Anspruch 2,
**dadurch gekennzeichnet, dass**
eine ebene Referenzfläche (29, 31) derart in wenigstens einem eine Öffnung (11, 12) formenden Gusskernabschnitt gebildet ist, dass als Abtastfläche (33, 35) ein um die entsprechende Öffnung (11, 12) in der Außenfläche der Turbinenschaufel (1) umlaufender gegenüber der Außenfläche der Turbinenschaufel (1) zurückversetzter Absatz gebildet wird.

4. Verfahren nach einem der Ansprüche 1 bis 3,
**dadurch gekennzeichnet, dass**
- der wenigstens eine Gusskern (21, 23) eine ebene Referenzfläche (29, 31) mit einer in der Radialrichtung (R) der herzustellenden Turbinenschaufel (1) oder einer entgegen der Radialrichtung (R) der herzustellenden Turbinenschaufel (1) verlaufenden Flächennormalen aufweist und/oder
- der wenigstens eine Gusskern (21, 23) eine ebene Referenzfläche mit einer in der Axialrichtung (A) der herzustellenden Turbinenschaufel (1) oder entgegen der Axialrichtung (A) der herzustellenden Turbinenschaufel (1) verlaufenden Flächennormalen aufweist und/oder
- der wenigstens eine Gusskern (21, 23) eine ebene Referenzfläche mit einer in der Umfangsrichtung der herzustellenden Turbinenschaufel (1) oder entgegen der Umfangsrichtung der herzustellenden Turbinenschaufel (1) verlaufenden Flächennormalen aufweist.

5. Verfahren nach Anspruch 4,
**dadurch gekennzeichnet, dass**
der wenigstens eine Gusskern (23) zum Formen eines entgegen der Radialrichtung (R) der herzustellenden Turbinenschaufel (1) offenen Hohlraums (9) dient und der wenigstens eine Gusskern (23) eine ebene Referenzfläche (31) mit einer in der Radialrichtung (R) der herzustellenden Turbinenschaufel verlaufenden Flächennormalen aufweist.

6. Verfahren nach Anspruch 4 oder Anspruch 5,
**dadurch gekennzeichnet, dass**
der wenigstens eine Gusskern (21) zum Formen eines in der Radialrichtung (R) der herzustellenden Turbinenschaufel (1) offenen Hohlraums (15) dient und der wenigstens eine Gusskern (21) eine ebene Referenzfläche (29) mit einer entgegen der Radialrichtung (R) der herzustellenden Turbinenschaufel (1) verlaufenden Flächennormalen aufweist.

7. Verfahren zum Ermitteln der Lage eines beim Gießen einer Turbinenschaufel (1) verwendeten Gusskerns (21, 23) nach dem Fertigstellen der Turbinenschaufel (1) im Rahmen eines Wiederaufarbeitungsprozesses nach einem Betrieb der Turbinenschaufel,
**dadurch gekennzeichnet, dass**
eine mit dem Verfahren nach einem der vorangehenden Ansprüche hergestellte Turbinenschaufel (1) Verwendung findet und die wenigstens eine ebene Abtastfläche (33, 35) in der Schaufelinnenfläche (10, 18, 19) mit dem Messkopf (37) einer Koordinatenmessung abgetastet wird, um die Lage
und/oder die Orientierung der wenigstens einen ebenen Abtastfläche (33, 35) in Bezug auf die Schaufelgeometrie zu ermitteln, und aus ermittelten Lage und/oder Orientierung der wenigstens einen ebenen Abtastfläche (33, 35) die Lage und/oder Orientierung des beim Gießen der Turbinenschaufel verwendeten Gusskerns (21, 23) ermittelt wird.

8. Turbinenschaufel (1) mit einer in einem Koordinatensystem definierten Schaufelgeometrie und wenigstens einem nach außen offenen, eine Schaufelinnenfläche (10, 18, 19) aufweisenden Hohlraum (9, 15),
wobei in der Schaufelinnenfläche (10, 18, 19) wenigstens eine für einen Messkopf (37) einer Koordinatenmesseinrichtung zugängliche ebene Abtastfläche (33, 35) ausgebildet ist,
wobei der wenigstens einen ebenen Abtastfläche (33, 35) eine definierte Soll-Lage und/oder eine definierte Soll-Orientierung in Bezug auf das Koordinatensystem, in dem die Schaufelgeometrie definiert ist, zugeordnet ist.

9. Turbinenschaufel (1) nach Anspruch 8,
**dadurch gekennzeichnet, dass**
der nach außen offene Hohlraum (9, 15) wenigstens eine Öffnung (11, 12) in einer Außenfläche der Turbinenschaufel (1) aufweist und sich die ebene Abtastfläche (33, 35) derart in oder in der Nähe der Öffnung (11, 12) befindet, dass sie von außerhalb der Turbinenschaufel (1) für einen Messkopf (37) einer Koordinatenmesseinrichtung leicht zugänglich ist.

10. Turbinenschaufel (1) nach Anspruch 9,
**dadurch gekennzeichnet, dass**
bei wenigstens einer Öffnung (11, 12) die Abtastfläche (33, 35) ein um die entsprechende Öffnung (11, 12) in der Außenfläche der Turbinenschaufel (1) umlaufender gegenüber der Außenfläche der Turbinenschaufel (1) zurückversetzter Absatz ist.

11. Turbinenschaufel (1) nach Anspruch 9 oder Anspruch 10,
**dadurch gekennzeichnet, dass**
die Öffnung (11, 12) mit einem Blech versehen ist, das zumindest teilweise an der Abtastfläche anliegt.

12. Turbinenschaufel (1) nach einem der Ansprüche 8 bis 11,
**dadurch gekennzeichnet, dass**
- die Schaufelinnenfläche (10, 18, 19) wenigstens eine ebene Abtastfläche (33, 35) aufweist, deren Flächennormale in der Radialrichtung (R) der Turbinenschaufel (1) oder entgegen der Radialrichtung (R) der Turbinenschaufel (1) verläuft und/oder
- die Schaufelinnenfläche (10, 18, 19) wenigstens eine ebene Abtastfläche aufweist, deren Flächennormale in der Axialrichtung (A) der Turbinenschaufel (1) oder entgegen der Axialrichtung (A) der Turbinenschaufel (1) verläuft
und/oder
- die Schaufelinnenfläche (10, 18, 19) wenigstens eine ebene Abtastfläche aufweist, deren Flächennormale in der Umfangsrichtung der Turbinenschaufel (1) oder entgegen der Umfangsrichtung der Turbinenschaufel (1) verläuft.

13. Turbinenschaufel (1) nach Anspruch 12,
**dadurch gekennzeichnet, dass**
der nach außen offene Hohlraum (9) entgegen der Radialrichtung (R) der Turbinenschaufel (1) offen ist und die wenigstens eine ebene Abtastfläche (35) eine entgegen der Radialrichtung (R) der Turbinenschaufel (1) verlaufenden Flächennormale aufweist.

14. Turbinenschaufel (1) nach Anspruch 11 oder Anspruch 12,
**dadurch gekennzeichnet, dass**
der nach außen offene Hohlraum (15) in der Radialrichtung (R) der Turbinenschaufel (1) offen ist und die wenigstens eine ebene Abtastfläche (33) eine in der Radialrichtung (R) der Turbinenschaufel (1) verlaufenden Flächennormale aufweist.

15. Gasturbine mit einer Turbinenschaufel nach einem der Ansprüche 8 bis 14.

## Claims

1. Method for producing turbine blades (1) with a blade geometry that is defined in a coordinate system and with at least one outwardly open cavity (9, 15) having a blade inner surface (10, 18, 19), in which the turbine blades (1) are cast, wherein the at least one outwardly open cavity (9, 15) is formed by means of at least one casting core (21, 23) which has a casting core outer surface (25, 27) that forms the blade inner surface (10, 18, 19) and which is removed from the cavity (9, 15) after the casting process, wherein
the casting core outer surface (25, 27) has at least one planar reference surface (29, 31) with a defined setpoint position and/or a defined setpoint orientation in relation to the coordinate system in which the blade geometry is defined, **characterized in that**
the planar reference surface (29, 31) is arranged in the casting core surface (25, 27) such that it forms, in the blade inner surface (10, 18, 19), at least one planar scanning surface (33, 35) that is accessible for a measuring head (37) of a coordinate measuring device.

2. Method according to Claim 1, **characterized in that**
the outwardly open cavity (9, 15) has at least one opening (11, 12) in an outer surface of the turbine blade (1), the at least one casting core (21, 23) has a casting core section that forms the at least one opening (11, 12), and the at least one planar reference surface (29, 31) is formed in or close to the casting core section forming the opening (11, 12) such that the at least one planar scanning surface (33, 35), formed in the blade inner surface (10, 18, 19) by the at least one planar reference surface (29, 31), is accessible, from outside the turbine blade (1), for a measuring head (37) of a coordinate measuring device.

3. Method according to Claim 2,
**characterized in that**
a planar reference surface (29, 31) is formed in at least one casting core section forming an opening (11, 12) such that there is formed, as the scanning surface (33, 35), a shoulder which surrounds the corresponding opening (11, 12) in the outer surface of the turbine blade (1) and is recessed with respect to the outer surface of the turbine blade (1).

4. Method according to one of Claims 1 to 3,
**characterized in that**
- the at least one casting core (21, 23) has a planar reference surface (29, 31) with a surface normal running in the radial direction (R) of the turbine blade (1) that is to be produced or counter to the radial direction (R) of the turbine blade (1) that is to be produced, and/or
- the at least one casting core (21, 23) has a planar reference surface with a surface normal running in the axial direction (A) of the turbine blade (1) that is to be produced or counter to the axial direction (A) of the turbine blade (1) that is to be produced, and/or
- the at least one casting core (21, 23) has a planar reference surface with a surface normal running in the circumferential direction of the turbine blade (1) that is to be produced or counter to the circumferential direction of the turbine blade (1) that is to be produced.

5. Method according to Claim 4,
**characterized in that**
the at least one casting core (23) serves for forming a cavity (9) that is open counter to the radial direction (R) of the turbine blade (1) that is to be produced, and the at least one casting core (23) has a planar reference surface (31) with a surface normal running in the radial direction (R) of the turbine blade that is to be produced.

6. Method according to Claim 4 or Claim 5,
**characterized in that**
the at least one casting core (21) serves for forming a cavity (15) that is open in the radial direction (R) of the turbine blade (1) that is to be produced, and the at least one casting core (21) has a planar reference surface (29) with a surface normal running counter to the radial direction (R) of the turbine blade (1) that is to be produced.

7. Method for determining the position of a casting core (21, 23) used when casting a turbine blade (1), after completion of the turbine blade (1) in the context of a refurbishment process after operation of the turbine blade,
**characterized in that**
use is made of a turbine blade (1) produced according to the method according to one of the preceding claims, and the at least one planar scanning surface (33, 35) in the blade inner surface (10, 18, 19) is scanned with the measuring head (37) of a coordinate measuring system in order to determine the position and/or orientation of the at least one planar scanning surface (33, 35) in relation to the blade geometry, and the determined position and/or orientation of the at least one planar scanning surface (33, 35) is used to determine the position and/or orientation of the casting core (21, 23) used when casting the turbine blade.

8. Turbine blade (1) with a blade geometry that is defined in a coordinate system and with at least one outwardly open cavity (9, 15) having a blade inner surface (10, 18, 19),
wherein there is formed, in the blade inner surface (10, 18, 19), at least one planar scanning surface (33, 35) that is accessible for a measuring head (37) of a coordinate measuring device, wherein the at least one planar scanning surface (33, 35) is assigned a defined setpoint position and/or a defined setpoint orientation in relation to the coordinate system in which the blade geometry is defined.

9. Turbine blade (1) according to Claim 8,
**characterized in that**
the outwardly open cavity (9, 15) has at least one opening (11, 12) in an outer surface of the turbine blade (1), and the planar scanning surface (33, 35) is located in or close to the opening (11, 12) such that it is easily accessible, from outside the turbine blade (1), for a measuring head (37) of a coordinate measuring device.

10. Turbine blade (1) according to Claim 9,
**characterized in that**
in the case of at least one opening (11, 12), the scanning surface (33, 35) is a shoulder which surrounds the corresponding opening (11, 12) in the outer surface of the turbine blade (1) and is recessed with respect to the outer surface of the turbine blade (1).

11. Turbine blade (1) according to Claim 9 or Claim 10,
**characterized in that**
the opening (11, 12) is provided with a plate that rests at least partially on the scanning surface.

12. Turbine blade (1) according to one of Claims 8 to 11,
**characterized in that**
- the blade inner surface (10, 18, 19) has at least one planar scanning surface (33, 35) whose surface normal runs in the radial direction (R) of the turbine blade (1) or counter to the radial direction (R) of the turbine blade (1), and/or
- the blade inner surface (10, 18, 19) has at least one planar scanning surface whose surface normal runs in the axial direction (A) of the turbine blade (1) or counter to the axial direction (A) of the turbine blade (1), and/or
- the blade inner surface (10, 18, 19) has at least one planar scanning surface whose surface normal runs in the circumferential direction of the turbine blade (1) or counter to the circumferential direction of the turbine blade (1).

13. Turbine blade (1) according to Claim 12, **characterized in that**
the outwardly open cavity (9) is open counter to the radial direction (R) of the turbine blade (1), and the at least one planar scanning surface (35) has a surface normal running counter to the radial direction (R) of the turbine blade (1).

14. Turbine blade (1) according to Claim 11 or Claim 12, **characterized in that**
the outwardly open cavity (15) is open in the radial direction (R) of the turbine blade (1), and the at least one planar scanning surface (33) has a surface normal running in the radial direction (R) of the turbine blade (1).

15. Gas turbine having a turbine blade according to one of Claims 8 to 14.

## Revendications

1. Procédé de fabrication d' aubes (1) de turbine, ayant une géométrie d' aube définie dans un système de coordonnées et au moins une cavité (9, 15), ouverte vers l' extérieur et ayant une surface (10, 18, 19) intérieure d' aube, dans lequel on coule les aubes (1) de turbine, dans lequel on forme la au moins une cavité (9, 15), ouverte vers l' extérieur, au moyen d' au moins un noyau (21, 23) de coulée, qui a une surface (25, 27) extérieure de noyau de coulée formant la surface (10, 18, 19) intérieure d' aube et qui est retiré de la cavité (9, 15) après l' opération de coulée,
dans lequel
la surface (25, 27) extérieur du noyau de coulée a au moins une surface (29, 31) de référence plane, ayant une position de consigne définie et/ou une orientation de consigne définie par rapport au système de coordonnées dans lequel la géométrie d' aube est définie,
**caractérisé en ce que**
la surface (29, 31) de référence plane est disposée dans la surface (25, 27) de noyau de coulée, de manière à former, dans la surface (10, 18, 19) intérieure d' aube, au moins une surface (33, 35) de balayage plane accessible à une tête (37) de mesure d' un dispositif de mesure de coordonnées.

2. Procédé suivant la revendication 1,
**caractérisé en ce que**
la cavité (9, 15) ouverte vers l' extérieur a au moins une ouverture (11, 12) dans une surface extérieure de l' aube (1) de turbine, le au moins un noyau (21, 23) de coulée a une partie de noyau de coulée formant la au moins une ouverture (11, 12) et la au moins une surface (29, 31) de référence plane est formée dans ou au voisinage de la partie du noyau de coulée formant l' ouverture (11, 12), de manière à ce que la au moins une surface (33, 35) de balayage plane, formée par la au moins une surface (29, 31) de référence plane dans la surface (10, 18, 19) intérieure d' aube, soit accessible de l' extérieur de l' aube (1) de turbine à une tête (37) de mesure d' un dispositif de mesure de coordonnées.

3. Procédé suivant la revendication 2,
**caractérisé en ce qu'**
une surface (29, 31) de référence plane est formée dans au moins une partie de noyau de coulée formant une ouverture (11, 12), de manière à former, comme surface (33, 35) de balayage, un ressaut faisant le tour de l' ouverture (11, 12) correspondante dans la surface extérieur de l' aube (1) de turbine et en retrait par rapport à la surface extérieure de l' aube (1) de turbine.

4. Procédé suivant l' une des revendications 1 à 3,
**caractérisé en ce que**
- le au moins un noyau (21, 23) de coulée a une surface (29, 31) de référence plane ayant une normale à la surface, s' étendant dans le sens (R) radial de l' aube (1) de turbine à fabriquer ou dans le sens contraire au sens (R) radial de l' aube (1) de turbine à fabriquer et/ou
- le au moins un noyau (21, 23) de coulée a une surface de référence plane ayant une normale à la surface s'étendant dans le sens (A) axial de l' aube (1) de turbine à fabriquer ou dans le sens contraire du sens (A) axial de l' aube (1) de turbine à fabriquer et/ou
- le au moins un noyau (21, 23) de coulée a une surface de référence plane ayant une normale à la surface s' étendant dans le sens périphérique de l' aube (1) de turbine à fabriquer ou dans le sens contraire au sens périphérique de l' aube (1) de turbine à fabriquer.

5. Procédé suivant la revendication 4,
**caractérisé en ce que**
le au moins un noyau (23) de coulée sert à former une cavité (9) ouverte dans le sens contraire au sens (R) radial de l' aube (1) de turbine à fabriquer et le au moins un noyau (23) de coulée a une surface (31) de référence plane ayant une normale à la surface s' étendant dans le sens (R) radial de l' aube de turbine à fabriquer.

6. Procédé suivant la revendication 4 ou la revendication 5,
**caractérisé en ce que**
le au moins un noyau (21) de coulée sert à former une cavité (15) ouverte dans le sens (R) radial de l' aube (1) de turbine à fabriquer et le au moins un noyau (21) de coulée a une surface (29) de référence plane ayant une normale à la surface s' étendant dans le sens contraire au sens (R) radial de l' aube (1) de turbine à fabriquer.

7. Procédé de détermination de la position d' un noyau (21, 23) de coulée utilisé lors de la coulée d' une aube (1) de turbine, après l' achèvement de l' aube (1) de turbine dans le cadre d' une opération de retraitement après un fonctionnement de l' aube de turbine,
**caractérisé en ce que**
on utilise une aube (1) de turbine fabriquée par le procédé suivant l' une des revendications précédentes et on balaie la au moins une surface (33, 35) de balayage plane dans la surface (10, 18, 19) intérieure d' aube, par la tête (37) de mesure d' un dispositif de mesure de coordonnées, afin de déterminer la position et/ou l' orientation de la au moins une surface (33, 35) de balayage plane par rapport à la géométrie d' aube et, à partir de la position et/ou de l' orientation, qui a été déterminée de la au moins une surface (33, 35) de balayage plane, on détermine la position et/ou l' orientation du noyau (21, 23) de coulée utilisé lors de la coulée de l' aube de turbine.

8. Aube (1) de turbine ayant une géométrie d' aube définie dans un système de coordonnées et au moins une cavité (9, 15), ouverte vers l' extérieur et ayant une surface (10, 18, 19) intérieure d' aube,
dans laquelle, dans la surface (10, 18, 19) intérieure d' aube, est constituée au moins une surface (33, 35) de balayage plane accessible à une tête (37) de mesure d' un dispositif de mesure de coordonnées,
dans laquelle, à la au moins une surface (33, 35) de balayage plane, est associée une position de consigne définie et/ou une orientation de consigne définie par rapport au système de coordonnées, dans lequel la géométrie d' aube est définie.

9. Aube (1) de turbine suivant la revendication 8,
**caractérisée en ce que**
la cavité (9, 15) ouverte vers l' extérieur a au moins une ouverture (11, 12) dans une surface extérieure de l' aube (1) de turbine et la surface (33, 35) de balayage plane se trouve dans, ou à proximité, de l' ouverture (11, 12 ), de manière à être accessible facilement de l' extérieur de l' aube (1) de turbine à une tête (37) de mesure d' un dispositif de mesure de coordonnées.

10. Aube (1) de turbine suivant la revendication 9,
**caractérisée en ce que**,
pour au moins une ouverture (11, 12), la surface (33, 35) de balayage est un ressaut faisant le tour de l' ouverture (11, 12) correspondante dans la surface extérieure de l' aube (1) de turbine et en retrait par rapport à la surface extérieure de l' aube (1) de turbine.

11. Aube (1) de turbine suivant la revendication 9 ou la revendication 10,
**caractérisée en ce que**
l' ouverture (11, 12) est pourvue d' une tôle, qui s' applique, au moins en partie, à la surface de balayage.

12. Aube (1) de turbine suivant l'une des revendications 8 à 11,
**caractérisée en ce que**
- la surface (10, 18, 19) intérieure d' aube a au moins une surface (33, 35) de balayage plane, dont la normale à la surface s' étend dans le sens (R) radial de l' aube (1) de turbine ou dans le sens contraire au sens (R) radial de l' aube (1) de turbine et/ou
- la surface (10, 18, 19) intérieure d' aube a au moins une surface de balayage plane, dont la normale à la surface s' étend dans le sens (A) axial de l' aube (1) de turbine ou dans le sens contraire au sens (A) axial de l' aube (1) de turbine et/ou
- la surface (10, 18, 19) intérieure d' aube a au moins une surface de balayage plane, dont la normale à la surface s' étend dans le sens périphérique de l' aube (1) de turbine ou en sens contraire au sens périphérique de l' aube (1) de turbine.

13. Aube (1) de turbine suivant la revendication 12,
**caractérisée en ce que**
la cavité (9) ouverte vers l' extérieur est ouverte dans le sens contraire au sens (R) radial de l' aube (1) de turbine et la au moins une surface (35) de balayage plane a une normale à la surface s' étendant dans le sens contraire au sens (R) radial de l' aube (1) de turbine.

14. Aube (1) de turbine suivant la revendication 11 ou la revendication 12,
**caractérisée en ce que**
la cavité (15) ouverte vers l' extérieur est ouverte dans le sens (R) radial de l' aube (1) de turbine et la au moins une surface (33) de balayage plane a une normale à la surface s' étendant dans le sens (R) radial de l' aube (1) de turbine.

15. Turbine à gaz ayant une aube de turbine suivant l' une des revendications 8 à 14.
